(19) **Europäisches Patentamt**
**European Patent Office**
**Office européen des brevets**

(11) **EP 2 763 279 A1**

(12) **EUROPEAN PATENT APPLICATION**
published in accordance with Art. 153(4) EPC

(43) Date of publication:
06.08.2014 Bulletin 2014/32

(51) Int Cl.:
*H02J 17/00* (2006.01)   *H02J 7/00* (2006.01)

(21) Application number: 11872978.9

(22) Date of filing: 29.09.2011

(86) International application number:
PCT/JP2011/072356

(87) International publication number:
WO 2013/046391 (04.04.2013 Gazette 2013/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: Hitachi Power Solutions Co., Ltd.
Hitachi-shi, Ibaraki 317-0073 (JP)

(72) Inventors:
• SAWAYANAGI, Hironori
Hitachi-shi
Ibaraki 317-0073 (JP)

• ARIYOSHI, Nobutaka
Hitachi-shi
Ibaraki 317-0073 (JP)

(74) Representative: MERH-IP
Matias Erny Reichl Hoffmann
Paul-Heyse-Strasse 29
80336 München (DE)

(54) **CHARGING CONTROLLER AND CHARGING CONTROL METHOD**

(57)   A charging control device using wireless power supply presents a risk that a cycle for sampling a current value/voltage value of a secondary side is lengthened and a measurement value of a controlled object does not converge on a target value. A charging control device (10) includes a chopper circuit (12), a primary side coil (15), a primary side inverter circuit (20), and a control unit (30). A charged device (100) includes a secondary side coil (60), and a secondary side rectifier circuit (40) that is configured to be connectable to a storage cell (53). The control unit (30) samples a secondary side signal at a second cycle, samples a primary side signal at a first cycle shorter than the second cycle, estimates the secondary side signal at a timing of the primary side signal sampled this time, based on the secondary side signal, the primary side signal obtained when the secondary side signal is sampled, and the primary side signal sampled this time, and performs feedback control of a control signal so that a predetermined signal of the secondary side rectifier circuit (40) becomes constant.

FIG.1

EP 2 763 279 A1

## Description

### TECHNICAL FIELD

The present invention relates to a charging control device that charges a storage cell (secondary cell), and to a charging control method.

### BACKGROUND ART

In general, a charging control device that charges a storage cell is constituted by a converter and a rectifier that convert a power supply voltage into a charging voltage of the storage cell, and a control unit that performs feedback control of the converter based on a voltage to be applied to the storage cell and a current to flow through the storage cell. In recent years, for the purpose of charging a storage cell mounted on various devices such as smartphone, or on mobile objects and the like, with a good handleability, a wireless charging system has emerged, which is configured to electrically separate the primary side and the secondary side from each other, to transmit and receive power through electromagnetic induction by coils, and to wirelessly transmit a value of voltage to be applied to the storage cell and/or a value of current to flow through the storage cell, from the secondary side to the primary side. In this wireless charging system, the charging control device in the primary side can wirelessly supply power to a charged device in the secondary side to thereby charge a storage cell which is provided in the charged device.

Patent Literature 1 describes the invention which is configured to calculate a first residual capacity by adding up the currents of charge/discharge of the battery, to calculate a second residual capacity based on the voltage of the battery, and to perform charging based on these residual capacities.

Patent Literature 2 describes the invention which is configured to set the maximum charging power to perform charging based on the characteristics in the conversion efficiency of the charging power.

### CITATION LIST

#### Patent Literature

Patent Literature 1: Japanese Patent Application Publication No. 2006-197727
Patent Literature 2: Japanese Patent Application Publication No. 2010-200530

### SUMMARY OF INVENTION

#### Technical Problem

However, a charging control device using wireless power supply has a restriction that the secondary side and the primary side are wirelessly connected, and thus a cycle for sampling a value of voltage to be applied to a storage cell and/or a value of current to flow through the storage cell is lengthened. This causes a delay in the voltage value and/or the current value maintained in the sampling interval and in a signal for feedback control, and influences the control, and thus there is a risk that a measurement value of a controlled object does not converge on a target value. In a charging device not using wireless power supply, there is a similar risk in the case where a sampling interval is lengthened due to some restrictions to cause a delay in the feedback control.

In such cases, it is considered to perform feedback control using a current value and/or a voltage value at the primary side. However, since a load resistance of the storage cell varies as the charging progresses and the location of a charged device may be changed, the relationship between the primary side and the secondary side does not necessarily remain constant. Consequently, there is a risk that a measurement value of a controlled object does not converge on a target value.

It is therefore an object of the present invention to provide a charging control device and a charging control method that estimate interpolated values of a secondary side signal (voltage, current) in a sampling interval.

#### Solution to Problem

In order to solve the above problems and to attain the above object, the present invention is configured as follows.

That is, a first aspect of the present invention provides a charging control device adapted to charge an electric storage unit of a charged device that includes a secondary side coil, and a secondary side circuit connected to the secondary side coil and configured to be connectable to the electric storage unit, the charging control device including: a voltage control circuit that controls an output voltage by means of a control signal; a primary side circuit to which the output voltage of the voltage control circuit is applied, and which is provided with a primary side coil capable of electromagnetically inducing the secondary side coil; and a control unit that includes means for sampling a primary side signal of the primary side circuit, and means for sampling a secondary side signal of the secondary side circuit, the control unit being connected to the voltage control circuit and outputting the control signal, wherein the control unit samples the secondary side signal at a second cycle, samples the primary side signal at a first cycle shorter than the second cycle, estimates the secondary side signal at a timing of the primary side signal sampled this time, based on the secondary side signal, the primary side signal obtained when the secondary side signal is sampled, and the primary side signal sampled this time, and performs feedback control of the control signal so that a predetermined signal of the secondary side circuit becomes constant.

**Advantageous Effects of Invention**

According to the present invention, it is possible to provide a charging control device and a charging control method adapted to estimate interpolated values of the secondary side signal (voltage, current) during the sampling interval.

**Brief Description of Drawings**

FIG.1 is a schematic configuration diagram illustrating a charging control device and a charged device in a first embodiment.
FIG.2 is a schematic configuration diagram illustrating an inverter circuit and a secondary side rectifier circuit in the first embodiment.
FIGS.3A and 3B are diagrams showing results of measurement on the relationship between the primary side and the secondary side.
FIGS.4A and 4B are diagrams showing methods of estimation at the secondary side in the first embodiment.
FIGS.5A and 5B are flowcharts representing a control processing in the first embodiment.
FIGS.6A and 6B are flowcharts representing a control processing in a second embodiment.
FIGS.7A and 7B are flowcharts representing a control processing in a third embodiment.
FIG.8 is a schematic configuration diagram illustrating a charging control device and a charged device in a comparative example.
FIG.9 is a flowchart representing a control processing in the comparative example.
FIGS.10A and 10B are diagrams showing results of simulation on the comparative example and the first embodiment.

**Description of Embodiments**

Hereinafter, embodiments for carrying out the present invention will be described in detail with reference to the drawings.

(Configuration of First Embodiment)

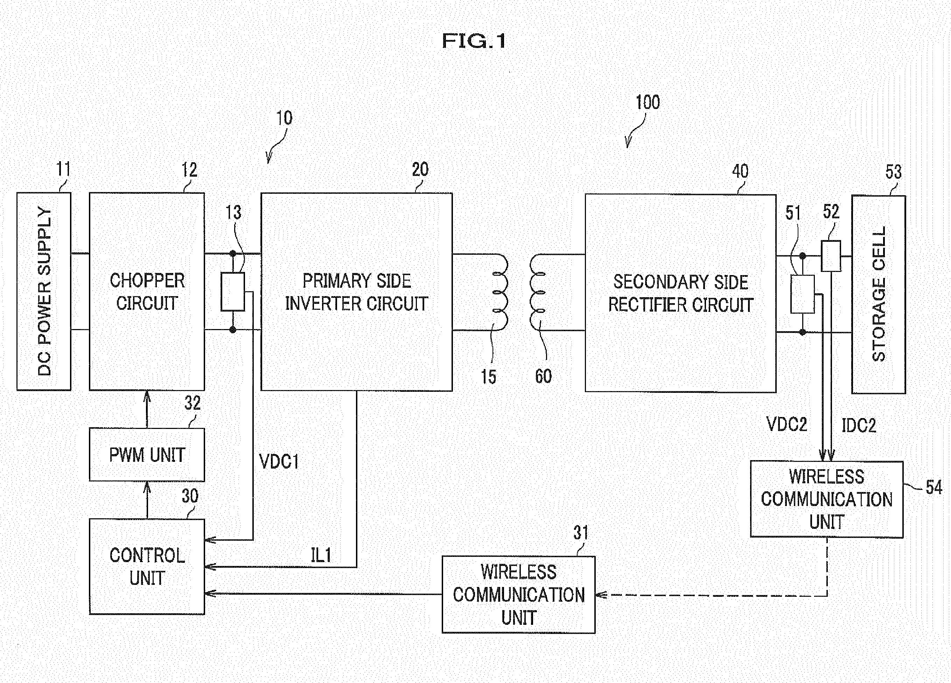

FIG.1 is a schematic configuration diagram illustrating a charging control device and a charged device in a first embodiment.
The charging control device 10 includes in the primary side, a chopper circuit 12 (voltage control circuit), a voltage measurement unit 13, a primary side inverter circuit 20 (primary side circuit), a primary side coil 15, a control unit 30, a wireless communication unit 31 (first wireless communication unit), and a PWM (Pulse Width Modulation) unit 32, and is connected to a DC power supply 11. Moreover, the charged device 100 in the secondary side, which is charged by the charging control device 10, includes a secondary side coil 60, a secondary side rectifier circuit 40 (secondary side circuit), a voltage measurement unit 51, a current measurement unit 52, and a wireless communication unit 54 (second wireless communication unit), and is connected to a storage cell 53 (electric storage unit).
A positive terminal and a negative terminal of the DC power supply 11 are connected to a positive terminal and a negative terminal in the input side of the chopper circuit 12, respectively. A positive terminal and a negative terminal in the output side of the chopper circuit 12 are connected to a positive terminal and a negative terminal in the input side of the primary side inverter circuit 20, respectively, and are connected in parallel with the voltage measurement unit 13. A positive terminal and a negative terminal in the output side of the primary side inverter circuit 20 are connected to the primary side coil 15.

In the first embodiment, the primary side coil 15 and the secondary side coil 60 are separable from each other. By locating the primary side coil 15 and the secondary side coil 60 in the vicinity of each other, it is possible to wirelessly supply power from the primary side coil 15 to the secondary side coil 60.

The secondary side coil 60 is connected to a positive terminal and a negative terminal in the input side of the secondary side rectifier circuit 40. A positive terminal and a negative terminal in the output side of the secondary side rectifier circuit 40 are connected in parallel with a circuit having the current measurement unit 52 and the storage cell 53 connected in series, and with the voltage measurement unit 51.

The output side of the voltage measurement unit 51 in the charged device 100 which is located in the secondary side, and the output side of the current measurement unit 52 are connected to the wireless communication unit 54. A signal at the output side of the voltage measurement unit 51 represents a secondary side voltage VDC2 to be applied to the storage cell 53 to which the voltage measurement unit 51 is connected. A signal at the output side of the current measurement unit 52 represents a secondary side current IDC2 to flow through the storage cell 53 to which the current measurement unit 52 is connected. The wireless communication unit 54 in the charged device 100 which is located in the secondary side is configured to be able to wirelessly transmit signals to the wireless communication unit 31 in the charging control device 10 which is located in the primary side.

The output side of the wireless communication unit 31, the output side of the voltage measurement unit 13, and the output side of the primary side inverter circuit 20 are connected to the control unit 30 in the charging control device 10 which is located in the primary side. A signal at the output side of the wireless communication unit 31 includes information of the secondary side voltage VDC2 and/or information of the secondary side current IDC2. A signal at the output side of the voltage measurement unit 13 includes information of a primary side voltage VDC1 which is applied to the voltage measurement unit 13. Namely, the signal at the output side of the voltage measurement unit 13 includes information of a voltage at the input side of the primary side inverter circuit 20 which is connected in parallel with the voltage measurement unit 13. A signal at the output side of the primary side inverter circuit 20 includes information of a primary side current IL1 which flows through the primary side coil 15.

An output signal of the control unit 30 is inputted to the PWM unit 32. An output signal of the PWM unit 32 is inputted to the chopper circuit 12.

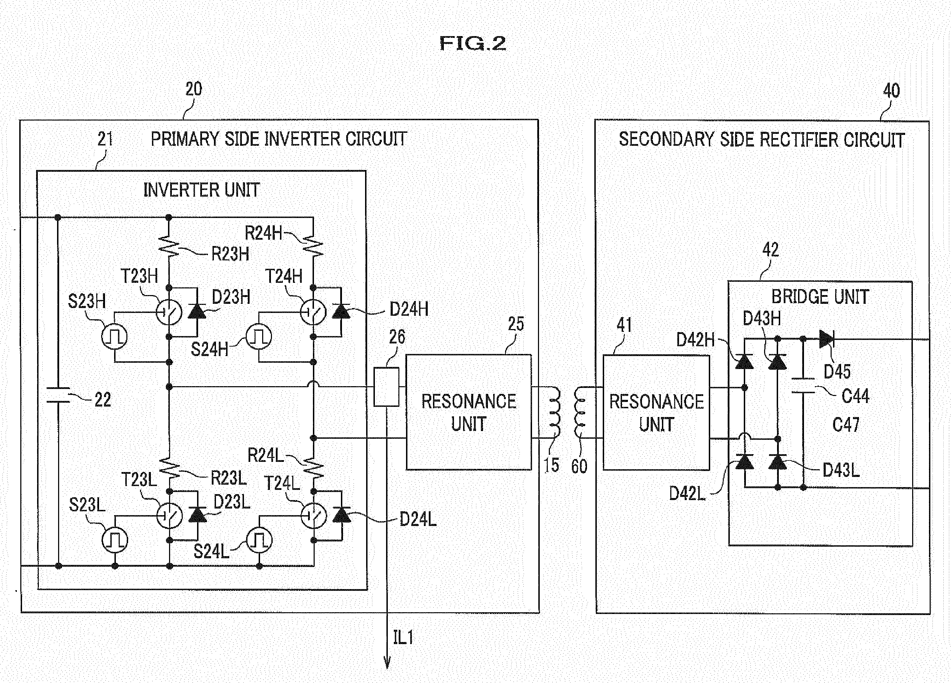

FIG.2 is a schematic configuration diagram illustrating the inverter circuit and the secondary side rectifier circuit in the first embodiment.

The primary side inverter circuit 20 includes an inverter unit 21, a resonance unit 25 and a current measurement unit 26.

A positive terminal and a negative terminal in the input side of the primary side inverter circuit 20 are connected to the inverter unit 21. One terminal in the output side of the inverter unit 21 is connected via the current measurement unit 26 to one terminal of the resonance unit 25, and the other terminal in the output side of the inverter unit 21 is connected to the other terminal of the resonance unit 25. Two terminals in the output side of the resonance unit 25 are connected to the two terminals of the primary side coil 15, respectively.

The inverter unit 21 includes a smoothing capacitor 22, a first switching leg and a second switching leg. The first switching leg includes a first upper arm resistor R23H, a first upper arm switching element T23H, a protection diode D23H, a first upper arm control element S23H, a first lower arm resistor R23L, a first lower arm switching element T23L, a protection diode D23L, and a first lower arm control element S23L. The second switching leg includes a second upper arm resistor R24H, a second upper arm switching element T24H, a protection diode D24H, a second upper arm control element S24H, a second lower arm resistor R24L, a second lower arm switching element T24L, a protection diode D24L, and a second lower arm control element S24L.

The positive terminal and the negative terminal in the input side of the inverter unit 21 are connected in parallel with the smoothing capacitor 22, the first switching leg and the second switching leg.

The first switching leg has the first upper arm resistor R23H, the first upper arm switching element T23H, the first lower arm resistor R23L and the first lower arm switching element T23L connected in series. The first upper arm control element S23H is connected to a control terminal of the first upper arm switching element T23H. The protection diode D23H is connected in the reverse direction to the first upper arm switching element T23H. The first lower arm control element S23L is connected to a control terminal of the first lower arm switching element T23L. The protection diode D23L is connected in the reverse direction to the first lower arm switching element T23L.

The second switching leg has the second upper arm resistor R24H, the second upper arm switching element T24H, the second lower arm resistor R24L and the second lower arm switching element T24L connected in series. The second upper arm control element S24H is connected to a control terminal of the second upper arm switching element T24H. The protection diode D24H is connected in the reverse direction to the second upper arm switching element T24H. The second lower arm control element S24L is connected to a control terminal of the second lower arm switching element T24L. The protection diode D24L is connected in the reverse direction to the second lower arm switching element T24L.

A node at which the first upper arm switching element T23H and the first lower arm resistor R23L included in the first switching leg are connected constitutes one output terminal of the inverter unit 21, and a node at which the second upper arm switching element T24H and the second lower arm resistor R24L included in the second switching leg are connected constitutes the other output terminal of the inverter unit 21.

The inverter unit 21 can flow a predetermined alternating current through the resonance unit 25 by outputting pulses of a predetermined pattern from the first upper arm control element S23H, the first lower arm control element S23L, the second upper arm control element S24H and the second lower arm control element S24L.

The secondary side coil 60 and the secondary side rectifier circuit 40 are provided in the secondary side. The secondary side coil 60 is configured to be separable from the primary side coil 15. When the secondary side coil 60 is located in the vicinity of the primary side coil 15, it is electromagnetically induced by the primary side coil 15 and thus allows a predetermined alternating current to flow therethrough.

The secondary side rectifier circuit 40 includes a resonance unit 41 and a bridge unit 42. The bridge unit 42 includes bridge diodes D42H, D42L, D43H and D43L, a smoothing capacitor C44, and a rectifier diode D45.

An output of the resonance unit 41 is connected to two input side nodes of the bridge unit 42. An anode terminal of the bridge diode D42H and a cathode terminal of the bridge diode D42L are connected to one of the input side nodes. An anode terminal of the bridge diode D43H and a cathode terminal of the bridge diode D43L are connected to another of the input side nodes.

A cathode terminal of the bridge diode D42H and a cathode terminal of the bridge diode D43H are connected to a positive terminal of the smoothing capacitor C44 and further connected via the rectifier diode D45 connected in the forward direction to a positive terminal in the output side of the secondary side rectifier circuit 40.

An anode terminal of the bridge diode D42L and an anode terminal of the bridge diode D43L are connected to a negative terminal of the smoothing capacitor C44 and a negative terminal (ground) in the output side of the secondary side rectifier circuit 40.

The secondary side rectifier circuit 40 is a rectifier circuit that rectifies an alternating current flowing through the secondary side coil 60, by the bridge unit 42, to convert into a direct current.

(Operation of First Embodiment)

A description will be given of the operation of the charging control device 10, based on FIG.1.

The control unit 30 samples the information of the secondary side voltage VDC2 and/or the information of the secondary side current IDC2, for example, every 100 ms (second cycle). The control unit 30 samples the primary side voltage VDC1 and/or the primary side current IL1 every 5 m (first cycle). In the present embodiment, the sampling cycle of the primary side voltage VDC1 and/or the primary side current IL1, and a control cycle at which a control signal for controlling the chopper circuit 12 is outputted, are the same cycle of 5 ms.

In the case of a constant voltage control, the control unit 30 estimates the secondary side voltage VDC2 at a timing of the primary side voltage VDC1 sampled this time, based on the secondary side voltage VDC2, the primary side voltage VDC1 obtained when the secondary side voltage VDC2 is sampled, and the primary side voltage VDC1 sampled this time, and performs feedback control of a control signal which is to be outputted to the PWM unit 32, so that the secondary side voltage VDC2 of the secondary side rectifier circuit 40 becomes constant.

In the case of a constant current control, the control unit 30 estimates the secondary side current IDC2 at a timing of the primary side current IL1 sampled this time, based on the secondary side current IDC2, the primary side current IL1 obtained when the secondary side current IDC2 is sampled, and the primary side current IL1 sampled this time, and performs feedback control of a control signal which is to be outputted to the PWM unit 32, so that the secondary side current IDC2 of the secondary side rectifier circuit 40 becomes constant.

In the case of a constant power control, the control unit 30 estimates the secondary side voltage VDC2 at a timing of the primary side voltage VDC1 sampled this time, based on the secondary side voltage VDC2, the primary side voltage VDC1 obtained when the secondary side voltage VDC2 is sampled, and the primary side voltage VDC1 sampled this time. Moreover, the control unit 30 estimates the secondary side current IDC2 at a timing of the primary side current IL1 sampled this time, based on the secondary side current IDC2, the primary side current IL1 obtained when the secondary side current IDC2 is sampled, and the primary side current IL1 sampled this time. Further, the control unit 30 performs feedback control of a control signal which is to be outputted to the PWM unit 32, so that power (product of the secondary side voltage VDC2 and the secondary side current IDC2) fed by the secondary side rectifier circuit 40 becomes constant.

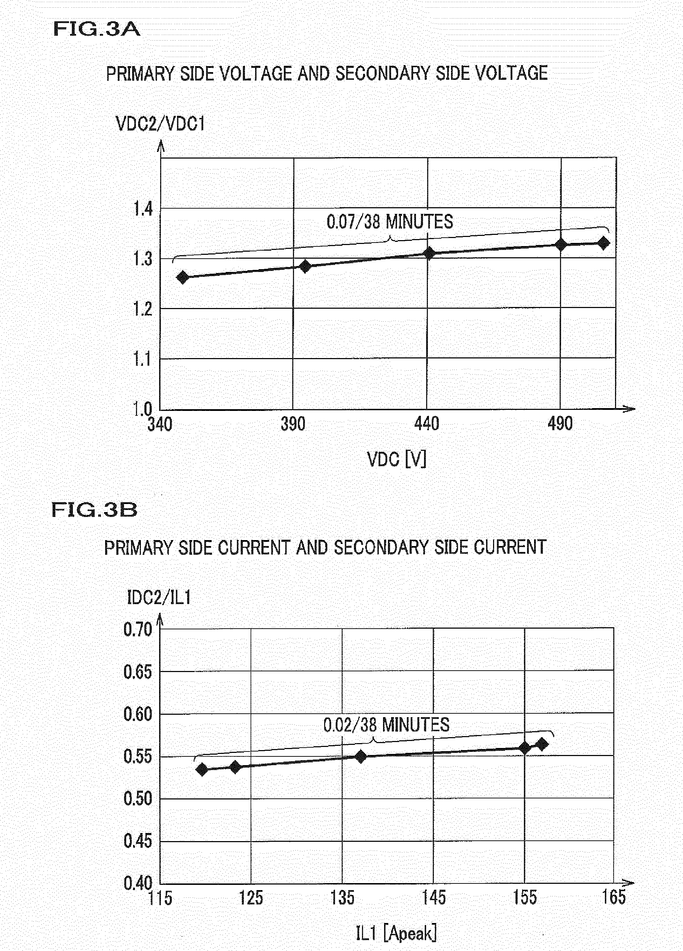

FIGS.3A and 3B are diagrams showing results of measurement on the relationship between the primary side and the secondary side.

FIG.3A is a diagram showing a result of measurement on the relationship between the primary side voltage VDC1 and the secondary side voltage VDC2. The abscissa axis represents the primary side voltage VDC1 [V], and the ordinate axis represents a ratio of the secondary side voltage VDC2 to the primary side voltage VDC1. The point plotted at the leftmost represents a start timing of the measurement. Subsequently, the primary side voltage VDC1 measured about every 10 minutes and the ratio of the secondary side voltage VDC2 to the primary side voltage VDC1 are plotted. The measurement is finished after 38 minutes from the start thereof. At this time, a change in the ratio of the secondary side voltage VDC2 to the primary side voltage VDC1 is 0.07. The ratio of the secondary side voltage VDC2 to the primary side voltage VDC1 changes continuously and gently. Relative to this temporal change, 100ms which is the sampling interval of the secondary side voltage VDC2 is very short. Consequently, it is possible to correct the ratio of the secondary side voltage VDC2 to the primary side voltage VDC1 based on the temporal change, and to estimate the secondary side voltage VDC2 during the sampling interval based on the corrected ratio and the value of the primary side voltage VDC1 sampled at the cycle of 5 ms.

FIG.3B is a diagram showing a result of measurement on the relationship between the primary side current IL1 and the secondary side current IDC2. The abscissa axis represents a peak value [Apeak] in amperes of the primary side current IL1, and the ordinate axis represents a ratio of the secondary side current IDC2 to the primary side current IL1. The point plotted at the leftmost represents a start timing of the measurement. Subsequently, the primary side current IL1 measured about every 10 minutes and the ratio of the secondary side current IDC2 to the primary side current IL1 are plotted. The measurement is finished after 38 minutes from the start thereof. At this time, a change in the ratio of the secondary side current IDC2 to the primary side current IL1 is 0.02. The ratio of the secondary side current IDC2 to the primary side current IL1 changes continuously and gently. Relative to this temporal change, 100ms which is the sampling interval of the secondary side current IDC2 is very short. Consequently, it is possible to correct the ratio of the secondary side current IDC2 to the primary side current IL1 based on the temporal change, and to estimate the secondary side current IDC2 during the sampling interval based on the corrected ratio and the value of the secondary side current IDC2 sampled at the cycle of 5 ms.

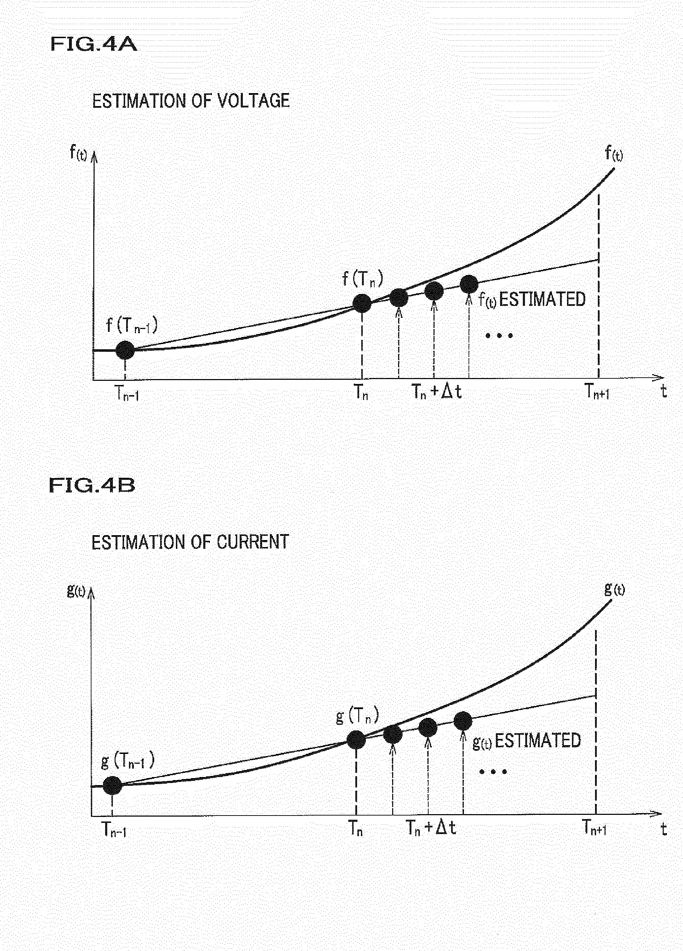

FIGS.4A and 4B are diagrams showing methods of estimation at the secondary side in the first embodiment.

FIG.4A is a diagram showing a method of estimation of the secondary side voltage in the first embodiment.

In this figure, for the time t, the primary side voltage VDC1, the secondary side voltage VDC2, and the function f(t) indicating a ratio of the secondary side voltage VDC2 to the primary side voltage VDC1, the relation of expression 1 is obtained.

[Formula 1]

Primary side voltage (*VDC1*): $v_1(t)$

Secondary side voltage *(VDC2)*: $v_2(t)$

$$f(t) = \frac{v_2(t)}{v_1(t)} \qquad \cdots\cdots (\text{expression } 1)$$

Performing Tailor expansion of the function f around t+Δt and first-order approximation of the result, the relation of expression 2 is obtained.

[Formula 2]

$$f(t+\Delta t) = f(t) + \frac{\partial f(t)}{\partial t}\Delta t \quad \cdots\cdots (\text{expression } 2)$$

Substituting the expression 2 into the expression 1 and deforming the substituted expression, the following expression 3 is obtained and thus the estimated value of the secondary side voltage VDC2 can be obtained.

[Formula 3]

$$\hat{v}_2(t+\Delta t) = v_1(t+\Delta t)f(t+\Delta t)$$

$$= v_1(t+\Delta t)\left( f(t) + \frac{\partial f(t)}{\partial t}\Delta t \right) \quad \cdots\cdots (\text{expression } 3)$$

In the actual control, f(t) is assumed to have values of the following expressions 4-1 and 4-2.

[Formula 4]

Secondary side voltage while not receiving secondary side signals: $\hat{v}_2(t)$

$$f(t) = \frac{\hat{v}_2(t)}{v_1(t)} \quad \cdots\cdots\cdots (\text{expression } 4\text{-}1)$$

Secondary side voltage while receiving secondary side signals: $v_2(T)$

$$f(T_n) = \frac{v_2(T_n)}{v_1(T_n)} \quad \cdots\cdots\cdots (\text{expression } 4\text{-}2)$$

From the expressions 4-1 and 4-2, the following expression 5 is obtained. Note that Tn represents a time at which the secondary side voltage VDC2 has been sampled. $\Delta$t represents a time difference between the control timing t and the time Tn at which the secondary side voltage VDC2 has been sampled most recently.
[Formula 5]

$$f(t+\Delta t) = f(t) + \left( \frac{f(T_n) - f(T_{n-1})}{T_n - T_{n-1}} \right) \Delta t \quad \cdots\cdots\cdots (\text{expression } 5)$$

From the above expressions 1 to 5, the estimated value of the secondary side voltage VDC2 at the time t=Tn+$\Delta$t is obtained by the following expression 6. Note that the sampling cycle of the secondary side voltage VDC2 is assumed to be $\Delta$t.
[Formula 6]

$$\hat{v}_2(t) = v_1(t)f(t)$$

$$= v_1(t)\left( f(t-\Delta t) + \left( \frac{f(T_n) - f(T_{n-1})}{T_n - T_{n-1}} \right) \Delta t \right) \quad \cdots\cdots\cdots (\text{expression } 6)$$

$$= v_1(t)\left( f(T_n) + \left( \frac{f(T_n) - f(T_{n-1})}{\Delta T} \right) \Delta t \right)$$

From the formulas described above, the function f(t) indicating a ratio of the secondary side voltage VDC2 to the primary side voltage VDC1 at the current time t can be calculated based on the function f indicating the relationship between the secondary side voltage VDC2 and the primary side voltage VDC1 obtained when the secondary side voltage VDC2 has been sampled, and on the elapsed time $\Delta$t after the secondary side voltage VDC2 has been sampled most recently.
FIG.4B is a diagram showing a method of estimation of the secondary side current in the first embodiment.
In this figure, for the time t, the primary side current IL1, the secondary side current IDC2, and the function g(t) indicating a ratio of the secondary side current IDC2 to the primary side current IL1 at the time t, the relation of expression 7 is obtained.
[Formula 7]
Primary side current (IL1):$i_1(t)$
Secondary side current (IDC2) : $i_2(t)$

$$g(t) = \frac{i_2(t)}{i_1(t)} \quad \cdots\cdots\cdots (\text{expression } 7)$$

Performing Tailor expansion of the function g around t+$\Delta$t and first-order approximation of the result, the relation of expression 8 is obtained.

[Formula 8]

$$g(t+\Delta t)=g(t)+\frac{\partial g(t)}{\partial t}\Delta t \quad \cdots\cdots (\text{expression 8})$$

Substituting the expression 8 into the expression 7 and deforming the substituted expression, the following expression 9 is obtained and thus the estimated value of the secondary side current IDC2 can be obtained.

[Formula 9]

$$\hat{i}_2(t+\Delta t)=i_1(t+\Delta t)g(t+\Delta t)$$

$$=g_1(t+\Delta t)\left(g(t)+\frac{\partial g(t)}{\partial t}\Delta t\right) \quad \cdots\cdots (\text{expression 9})$$

In the actual control, g(t) is assumed to have values of the following expressions 10-1 and 10-2.

[Formula 10]

Secondary side current while not receiving secondary side signals: $\hat{i}_2(t)$

$$g(t)=\frac{\hat{i}_2(t)}{i_1(t)} \quad \cdots\cdots (\text{expression 10-1})$$

Secondary side current while receiving secondary side signals: *i2(T)*

$$g(T_n)=\frac{i_2(T_n)}{i_1(T_n)} \quad \cdots\cdots (\text{expression 10-2})$$

From the expressions 10-1 and 10-2, the following expression 11 is obtained. Note that Tn represents a time at which the secondary side current IDC2 has been sampled. $\Delta t$ represents a time difference between the control timing t and the time Tn at which the secondary side current IDC2 has been sampled most recently.

[Formula 11]

$$g(t+\Delta t)=g(t)+\left(\frac{g(T_n)-g(T_{n-1})}{T_n-T_{n-1}}\right)\Delta t \quad \cdots\cdots (\text{expression 11})$$

From the above expressions 7 to 11, the estimated value of the secondary side current IDC2 at the time t=Tn+$\Delta$t is obtained by the following expression 12. Note that the sampling cycle of the secondary side current IDC2 is assumed to be $\Delta$t.

[Formula 12]

$$\hat{i}_2(t)=i_1(t)g(t)$$

$$=i_1(t)\left(g(t-\Delta t)+\left(\frac{g(T_n)-g(T_{n-1})}{T_n-T_{n-1}}\right)\Delta t\right) \quad \cdots\cdots (\text{expression 12})$$

$$=i_1(t)\left(g(T_n)+\left(\frac{g(T_n)-g(T_{n-1})}{\Delta T}\right)\Delta t\right)$$

From the formulas described above, the function g(t) indicating a ratio of the secondary side current IDC2 to the primary side current IL1 at the current time t can be calculated based on the function g indicating the relationship between the secondary side current IDC2 and the primary side current IL1 obtained when the secondary side current IDC2 has been sampled, and on the elapsed time Δt after the secondary side current IDC2 has been sampled most recently.

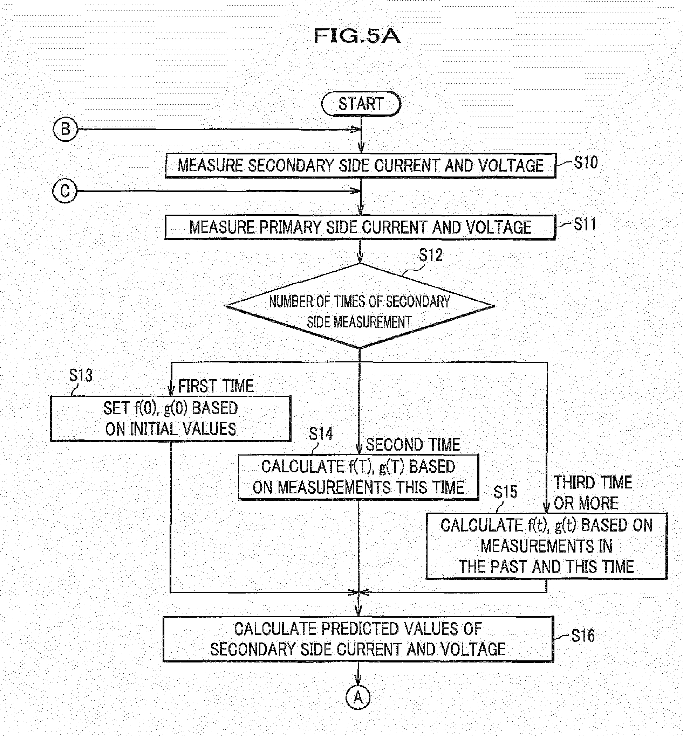

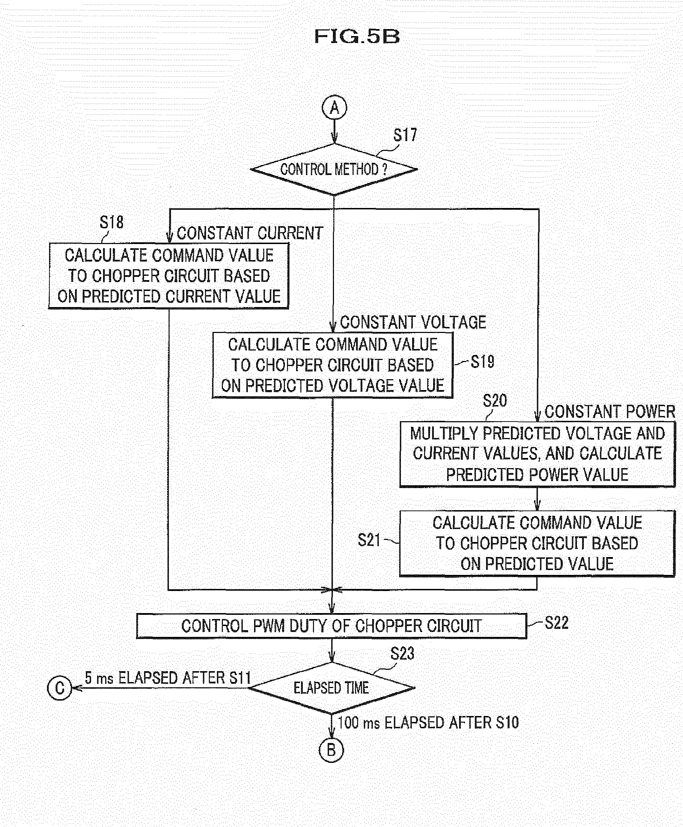

FIGS.5A and 5B are flowcharts representing a control processing in the first embodiment.

When the processing is started, in step S10, the control unit 30 of the charging control device 10 measures the secondary side current IDC2 and the secondary side voltage VDC2 via the wireless communication unit 31 and the wireless communication unit 54. From then on, the secondary side current IDC2 and the secondary side voltage VDC2 are sampled every 100 ms (second cycle).

In step S11, the control unit 30 of the charging control device 10 measures the primary side current IL1 and the primary side voltage VDC1. From then on, the primary side current IL1 and the primary side voltage VDC1 are sampled every 5 ms (first cycle).

In step S12, the control unit 30 of the charging control device 10 judges the number of times of measurement at the secondary side.

If the measurement at the secondary side is for the first time, a processing of step S13 is performed. If the measurement at the secondary side is for the second time, a processing of step S14 is performed. If the measurement at the secondary side is for the third time or more, a processing of step S15 is performed.

In step S13, the control unit 30 of the charging control device 10 sets f(0) and g(0) based on initial values by simulation, and performs a processing of step S16. The f(0) is an initial value (constant) obtained by simulation or the like, indicating the ratio of the secondary side voltage VDC2 to the primary side voltage VDC1. The g(0) is an initial value (constant) obtained by simulation or the like, indicating the ratio of the secondary side current IDC2 to the primary side current IL1.

In step S14, the control unit 30 of the charging control device 10 calculates f(T) and g(T) based on measurements at the secondary side, and performs the processing of step S16. The method of calculation in step S14 is represented by the following expressions 13-1 and 13-2.

[Formula 13]

$$f(T) = \frac{v_2(T)}{v_1(T)} \quad \cdots\cdots\cdots \text{(expression 13-1)}$$

$$g(T) = \frac{i_2(T)}{i_1(T)} \quad \cdots\cdots\cdots \text{(expression 13-2)}$$

In step S15, the control unit 30 of the charging control device 10 calculates f(t) and g(t) based on measurements at the secondary side, and performs the processing of step S16. The method of calculation in step S15 is represented by the following expressions 14-1 and 14-2.

[Formula 14]

$$f(t) = f(T_n) + \left( \frac{f(T_n) - f(T_{n-1})}{\Delta T} \right) \Delta t \quad \cdots\cdots\cdots \text{(expression 14-1)}$$

$$g(t) = g(T_n) + \left( \frac{g(T_n) - g(T_{n-1})}{\Delta T} \right) \Delta t \quad \cdots\cdots\cdots \text{(expression 14-2)}$$

In step S16, the control unit 30 of the charging control device 10 calculates a predicted value of the secondary side voltage VDC2 based on the calculated function f and the primary side voltage VDC1, and calculates a predicted value of the secondary side current IDC2 based on the calculated function g and the primary side current IL1.

The formula for obtaining the predicted value of the secondary side voltage VDC2 and the predicted value of the secondary side current IDC2 in the transition from step S13 to step S16 is represented by the following expression 15.
[Formula 15]

$$\hat{v}_2(t) = v_1(t)f(0)$$
$$\hat{i}_2(t) = i_1(t)g(0)$$
$$\cdots\cdots\cdots (\text{expression } 15)$$

The formula for obtaining the predicted value of the secondary side voltage VDC2 and the predicted value of the secondary side current IDC2 in the transition from step S14 to step S16 is represented by the following expression 16.
[Formula 16]

$$\hat{v}_2(t) = v_1(t)f(T)$$
$$\hat{i}_2(t) = i_1(t)g(T)$$
$$\cdots\cdots\cdots (\text{expression } 16)$$

The formula for obtaining the predicted value of the secondary side voltage VDC2 and the predicted value of the secondary side current IDC2 in the transition from step S15 to step S16 is represented by the following expression 17.
[Formula 17]

$$\hat{v}_2(t) = v_1(t)f(t)$$
$$\hat{i}_2(t) = i_1(t)g(t)$$
$$\cdots\cdots\cdots (\text{expression } 17)$$

In step S17, the control unit 30 of the charging control device 10 judges which control method is to be performed. The control unit 30 of the charging control device 10 performs a processing of step S18 if the control method is a constant current control, performs a processing of step S19 if the control method is a constant voltage control, and performs a processing of step S20 if the control method is a constant power control.
In step S18, the control unit 30 of the charging control device 10 calculates a command value to the chopper circuit 12 based on the predicted value of the secondary side current IDC2 so as to eliminate a difference between the predicted value and a target value. When the processing of step S18 is finished, the control unit 30 of the charging control device 10 performs a processing of step S22.
In step S19, the control unit 30 of the charging control device 10 calculates a command value to the chopper circuit 12 based on the predicted value of the secondary side voltage VDC2 so as to eliminate a difference between the predicted value and a target value. When the processing of step S19 is finished, the control unit 30 of the charging control device 10 performs the processing of step S22.
In step S20, the control unit 30 of the charging control device 10 multiplies the predicted value of the secondary side voltage VDC2 by the predicted value of the secondary side current IDC2, to calculate a predicted power value.
In step S21, the control unit 30 of the charging control device 10 calculates a command value to the chopper circuit 12 so as to eliminate a difference between the predicted value and a target value.
In step S22, the control unit 30 of the charging control device 10 outputs the command value to be inputted to the chopper circuit 12 to the PWM unit 32 and thus controls a PWM duty of the chopper circuit 12.
In step S23, the control unit 30 of the charging control device 10 judges an elapsed time after the measurements at the primary side in step S11, and an elapsed time after the measurements at the secondary side in step S10. The control unit 30 of the charging control device 10 returns to the processing of step S10 if 100 ms has elapsed after the measurements at the secondary side, and returns to the processing of step S11 if 5 ms has elapsed after the measurements at the primary side. From then on, the control unit 30 of the charging control device 10 repeats the processings described above until the power supply is turned off.

(Comparison of First Embodiment with Comparative Example)

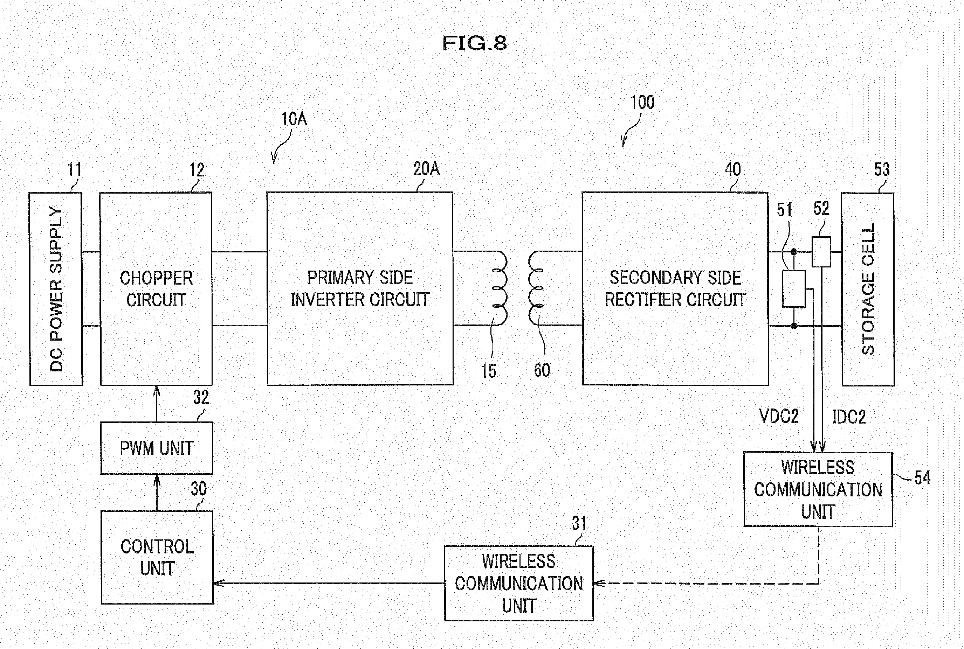

FIG.8 is a schematic configuration diagram illustrating a charging control device and a charged device in a comparative example.
The charging control device 10A in the comparative example differs from the charging control device 10 according to the first embodiment in that it does not include the voltage measurement unit 13, and in that a primary side inverter circuit 20A does not include the current measurement unit 26. Other configuration is the same as that of the charging control device 10 according to the first embodiment.

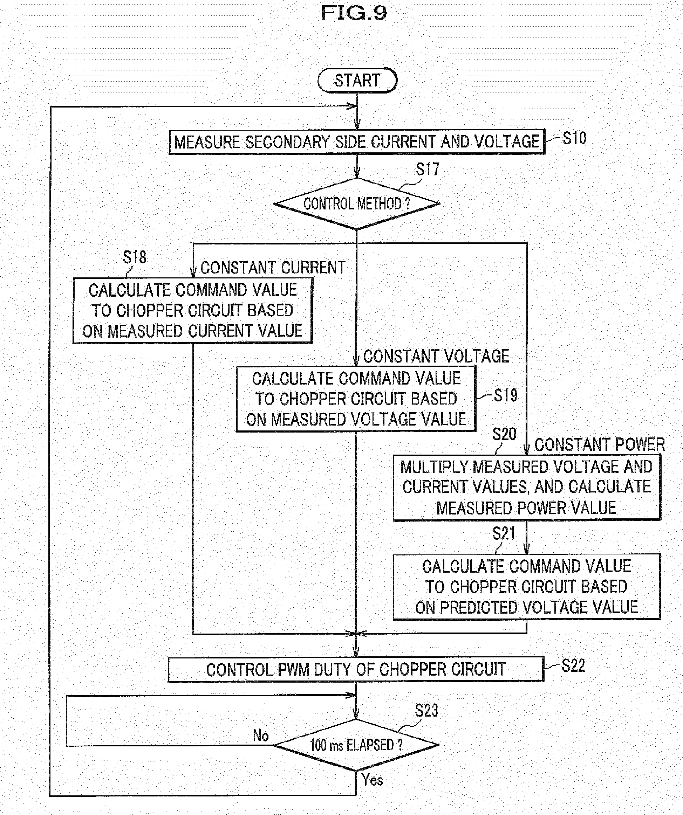

FIG.9 is a flowchart representing a control processing in the comparative example.

The processing in step S10 at the start of the control processing is the same as the processing in step S10 according to the first embodiment. When the processing of step S10 is finished, the charging control device 10A performs the processing of step S17 without performing the processings in steps S11 to S16 according to the first embodiment.

The processings in steps S17 to S23 are similar to the processings in steps S17 to S23 according to the first embodiment.

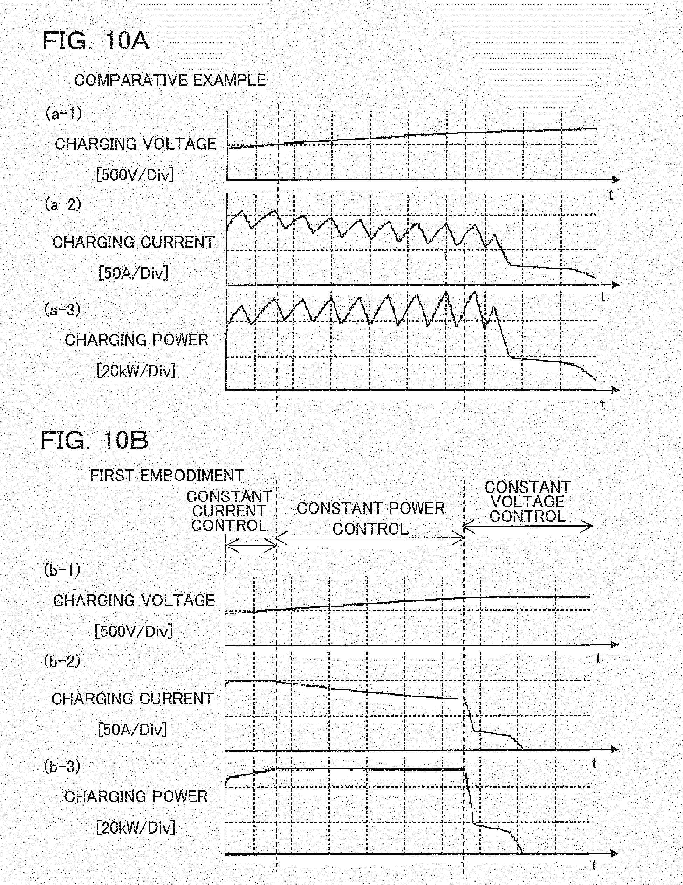

FIGS.10A and 10B are diagrams respectively showing results of simulation on the comparative example and the first embodiment. In FIG.10A, (a-1)~(a-3) show results of simulation on the comparative example. In FIG.10B, (b-1)~(b-3) show results of simulation on the first embodiment. In all of FIGS.10A and 10B, the abscissa axis represents a time t.

The ordinate axis in (a-1) of FIG.10A represents a charging voltage in the comparative example. The ordinate axis in (a-2) of FIG.10A represents a charging current in the comparative example. The ordinate axis in (a-3) of FIG.10A represents a charging power in the comparative example.

The ordinate axis in (b-1) of FIG.10B represents a charging voltage in the first embodiment. The ordinate axis in (b-2) of FIG.10B represents a charging current in the first embodiment. The ordinate axis in (b-3) of FIG.10B represents a charging power in the first embodiment.

The comparative example and the first embodiment, in common with each other, sequentially perform the constant current control, the constant power control and the constant voltage control over a predetermined period. As shown in (a-2) and (a-3) of FIG.10A, according to the constant current control and the constant power control in the comparative example, respective values fluctuate without converging on predetermined values. On the contrary, as shown in (b-2) and (b-3) of FIG.10B, according to the constant current control and the constant power control in the first embodiment, respective values converge on the predetermined values.

(Advantageous Effects of First Embodiment)

The first embodiment as explained above presents advantageous effects such as (A) and (B) described below.

(A) Also in a wireless power supply system, it is possible to perform an ideal charging control for the storage cell. This enables the charging control device 10 to prolong a life of the storage cell.

(B) The charging control device 10 updates the relationship between the primary side and the secondary side at every sampling of the secondary side. This enables the charging control device 10 to respond to changes in the relationship between the primary side and the secondary side due to environmental changes, e.g., deterioration of the elements, displacement in position of the coil during wireless charging, and the like.

(Configuration of Second Embodiment)

The configurations of the charging control device 10 and the charged device 100 according to the second embodiment are respectively the same as those of the charging control device 10 and the charged device 100 according to the first embodiment (FIG.1).

The features of the charging control device 10 according to the second embodiment, in addition to the features of the charging control device 10 according to the first embodiment, lie in memorizing a slope of the function f relative to the time t and a slope of the function g relative to the time t in the initial state, and calculating, from the first time measurement at the secondary side, a predicted current value and a predicted voltage value which reflect the slopes.

(Operation of Second Embodiment)

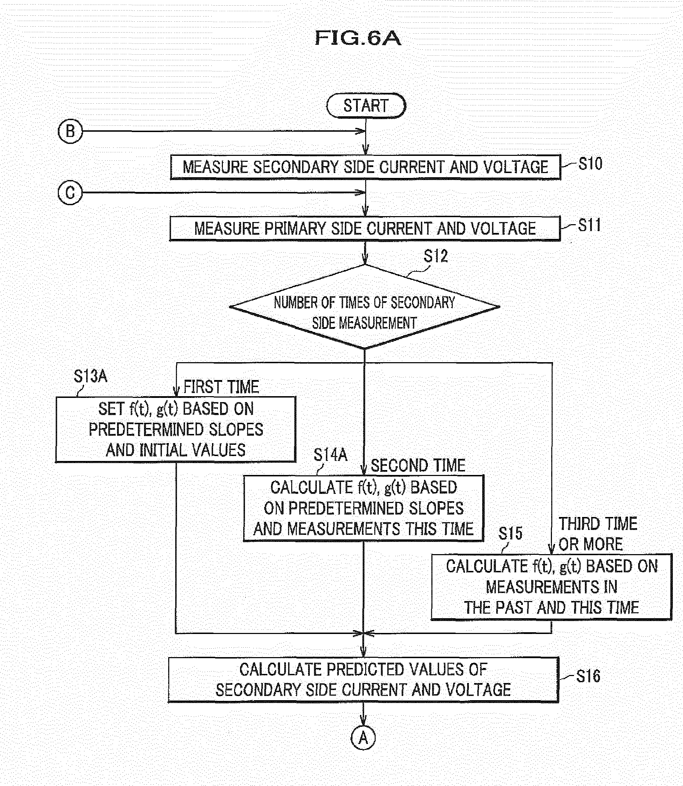

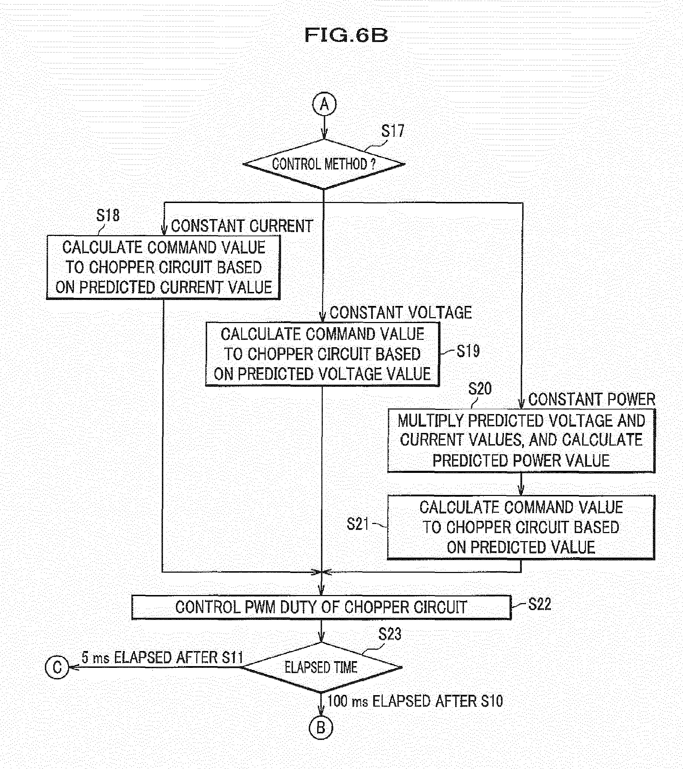

FIGS.6A and 6B are flowcharts representing a control processing in the second embodiment. The same reference signs are assigned to the same elements as those in the flowcharts representing the control processing in the first embodiment shown in FIGS.5A and 5B.

After starting the control processing, the processings in steps S10 to S12 are the same as those in steps S10 to S12 according to the first embodiment.

In step S13A, the control unit 30 of the charging control device 10 sets f(t) according to the following expression 18-1 and sets g(t) according to the following expression 18-2, based on the predetermined slopes and initial values, and performs the processing of step S16. Note that in step S13A, $\Delta t = t$.

[Formula 18]

$$f(t) = f(0) + \Delta f(0) \Delta t \quad \cdots\cdots\cdots \text{(expression 18-1)}$$

$$g(t) = g(0) + \Delta g(0) \Delta t \quad \cdots\cdots\cdots \text{(expression 18-2)}$$

In step S14A, the control unit 30 of the charging control device 10 calculates f (t) according to the following expression 19-1 and calculates g(t) according to the following expression 19-2, based on the predetermined slopes and measurements at the secondary side, and performs the processing of step S16. Note that in step S14A, $\Delta t = T - t$.
[Formula 19]

$$f(t) = f(T) + \Delta f(0) \Delta t \quad \cdots\cdots\cdots \text{(expression 19-1)}$$

$$g(t) = g(T) + \Delta g(0) \Delta t \quad \cdots\cdots\cdots \text{(expression 19-2)}$$

The processings in steps S16 to S23 are the same as those in steps S16 to S23 according to the first embodiment.
This enables the control unit 30 of the charging control device 10 to calculate, immediately after the first time measurement at the secondary side, a precisely predicted current value and a precisely predicted voltage value which reflect the slopes at the secondary side relative to the time t.

(Advantageous Effects of Second Embodiment)

The second embodiment as explained above presents an advantageous effect such as (C) described below.
(C) The control unit 30 of the charging control device 10 can calculate, immediately after the first time measurement at the secondary side, a precisely predicted current value and a precisely predicted voltage value which reflect the slopes at the secondary side relative to the time t.

(Configuration of Third Embodiment)

The configurations of the charging control device 10 and the charged device 100 according to the third embodiment are respectively the same as those of the charging control device 10 and the charged device 100 according to the first embodiment (FIG.1).
The features of the charging control device 10 according to the third embodiment lie in calculating, based on the measurements of signals (current or voltage) at the primary side and the secondary side, a ratio of the secondary side signal to the primary side signal, and based on the ratio, calculating predicted signal values (predicted current value and/or predicted voltage value). This is equivalent to zero-order approximation of Taylor expansion. If a change in the ratio of the secondary side to the primary side relative to time is extremely small, or if the sampling cycle of the primary side signal and the control cycle are extremely fast, it is possible to appropriately control the charging even with the zero-order approximation of Taylor expansion.

(Operation of Third Embodiment)

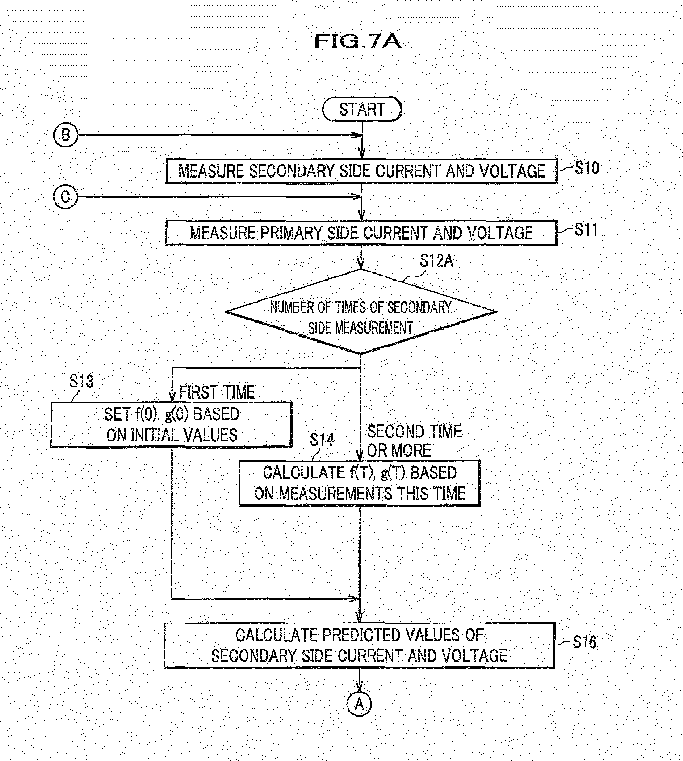

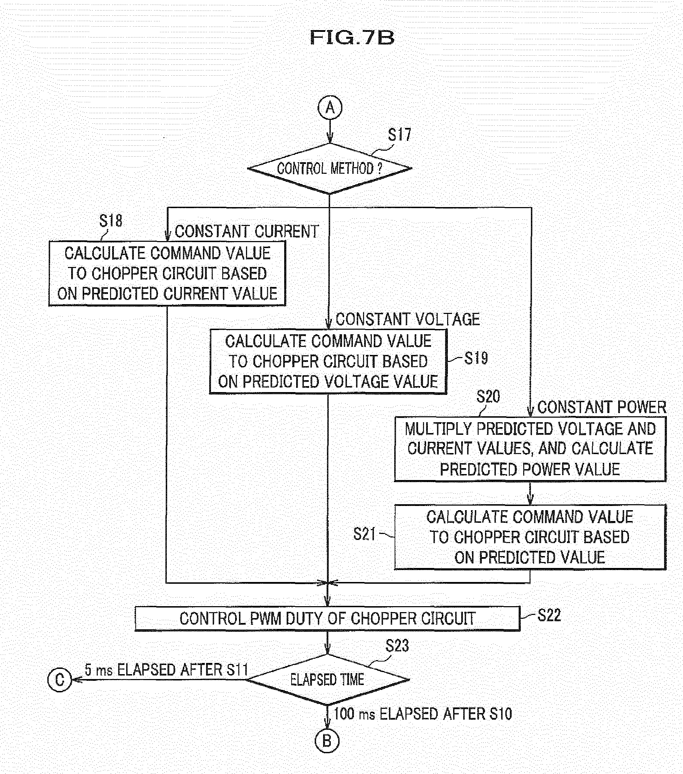

FIGS.7A and 7B are flowcharts representing a control processing in the third embodiment. The same reference signs are assigned to the same elements as those in the flowcharts representing the control processing in the first embodiment shown in FIGS.5A and 5B.
After starting the control processing, the processings in steps S10 and S11 are the same as those in steps S10 and S11 according to the first embodiment.
In step S12A, the control unit 30 of the charging control device 10 judges the number of times of measurement at the secondary side.
The control unit 30 of the charging control device 10 performs the processing of step S13 if the measurement at the secondary side is for the first time, and performs the processing of step S14 if the measurement at the secondary side is for the second time or more.

The processings in steps S13 to S23 are similar to the processings in steps S13 to S23 according to the first embodiment.

(Advantageous Effects of Third Embodiment)

The third embodiment as explained above presents an advantageous effect such as (D) described below.

(D) The control unit 30 of the charging control device 10 performs the control based on the ratio of the secondary side signal to the primary side signal sampled at the same time. This enables the control unit 30 of the charging control device 10 to perform a high speed feedback control with less amount of calculation and thus to realize a stable convergence on the target values.

(Modifications)

The present invention is not limited to the above embodiments and can be modified and put into practice within the scope not departing from the gist of the present invention. The form of utilization and the modifications include, for example, ones such as (a) to (c) described below.

(a) The control unit 30 of the charging control device 10 according to the first embodiment estimates the signals at the secondary side by the first-order approximation of Tailor expansion. The control unit 30 of the charging control device 10 according to the third embodiment estimates the signals at the secondary side by the zero-order approximation of Tailor expansion. However, the control unit 30 of the charging control device 10 is not limited to the above embodiments, and may estimate the signals at the secondary side by second-order or more approximation of Tailor expansion. This enables the charging control device 10 to perform a further precise approximation.

(b) The charged device 100 according to the first to third embodiments transmits the signals at the secondary side via the wireless path to the charging control device 10. However, the charged device 100 is not limited to the above embodiments, and may transmit the secondary side voltage VDC2 and/or the secondary side current IDC2 to the charging control device 10 through the means for wirelessly transmitting information, for example, by means of infrared light, visible light, ultraviolet light, audible sound, ultrasonic wave, magnetic field, or the like.

(c) In the first to third embodiments, the signals at the secondary side are wirelessly transmitted from the charged device 100 to the charging control device 10. However, the present invention is not limited to the above embodiments, and may be applied to a system in which a long delay is generated in a transmission of signals from the secondary side to the primary side.

**Reference Signs List**

| | |
|---|---|
| 10, 10A | Charging Control Device |
| 11 | DC Power Supply |
| 12 | Chopper Circuit (Voltage Control Circuit) |
| 13 | Voltage Measurement Unit |
| 15 | Primary side Coil |
| 20, 20A | Primary side Inverter Circuit (Primary side Circuit) |
| 21 | Inverter Unit |
| 25 | Resonance Unit |
| 26 | Current Measurement Unit |
| 30 | Control Unit |
| 31 | Wireless Communication Unit (First Wireless Communication Unit) |
| 32 | PWM Unit |
| 40 | Secondary side Rectifier Circuit (Secondary side Circuit) |
| 51 | Voltage Measurement Unit |
| 52 | Current Measurement Unit |
| 53 | Storage Cell (Electric Storage Unit) |
| 54 | Wireless Communication Unit (Second Wireless Communication Unit) |
| 60 | Secondary side Coil |
| 100 | Charged device |
| IL1 | Primary side Current (Primary side Signal) |
| VDC1 | Primary side Voltage (Primary side Signal) |

**EP 2 763 279 A1**

IDC2    Secondary side Current (Secondary side Signal)
VDC2   Secondary side Voltage (Secondary side Signal)

**Claims**

1. A charging control device adapted to charge an electric storage unit of a charged device that includes a secondary side coil, and a secondary side circuit connected to the secondary side coil and configured to be connectable to the electric storage unit, the charging control device comprising:

   a voltage control circuit that controls an output voltage by means of a control signal;
   a primary side circuit to which the output voltage of the voltage control circuit is applied, and which is provided with a primary side coil capable of electromagnetically inducing the secondary side coil; and
   a control unit that includes means for sampling a primary side signal of the primary side circuit, and means for sampling a secondary side signal of the secondary side circuit, the control unit being connected to the voltage control circuit and outputting the control signal, wherein
   the control unit samples the secondary side signal at a second cycle,
   samples the primary side signal at a first cycle shorter than the second cycle,
   estimates the secondary side signal at a timing of the primary side signal sampled this time, based on the secondary side signal, the primary side signal obtained when the secondary side signal is sampled, and the primary side signal sampled this time, and
   performs feedback control of the control signal so that a predetermined signal of the secondary side circuit becomes constant.

2. The charging control device according to claim 1, wherein
   the charged device further includes a second wireless communication unit connected to the secondary side circuit,
   the charging control device further includes a first wireless communication unit connected to the control unit, and
   the control unit samples the secondary side signal at the second cycle via the second wireless communication unit and the first wireless communication unit.

3. The charging control device according to claim 1, wherein
   the control unit calculates a ratio of the secondary side signal to the primary side signal obtained when the secondary side signal is sampled, and
   multiplies the ratio by the primary side signal sampled this time to estimate the secondary side signal at the timing of the primary side signal sampled this time.

4. The charging control device according to claim 1, wherein
   the control unit calculates a ratio of the secondary side signal to the primary side signal obtained when the secondary side signal is sampled, and an amount of change in the ratio relative to time,
   corrects the ratio based on at least a time difference from the secondary side signal being sampled until the primary side signal being sampled this time, and on the amount of change in the ratio relative to time, and
   multiplies the corrected ratio by the primary side signal sampled this time to estimate the secondary side signal at the timing of the primary side signal sampled this time.

5. The charging control device according to claim 4, wherein
   the control unit prospectively sets the amount of change in the ratio relative to time.

6. The charging control device according to any one of claims 1 to 5, wherein
   the primary side signal includes a voltage which is applied to the primary side circuit, and
   the secondary side signal and the predetermined signal each include a voltage which the secondary side circuit applies to the electric storage unit.

7. The charging control device according to any one of claims 1 to 5, wherein
   the primary side signal includes a current which flows through the primary side coil of the primary side circuit, or a current proportional to the current which flows through the primary side coil, and
   the secondary side signal and the predetermined signal each include a current which the secondary side circuit applies to the electric storage unit.

14

8. The charging control device according to any one of claims 1 to 5, wherein
the primary side signal includes a voltage which is applied to the primary side circuit, and a current which flows through the primary side coil,
the secondary side signal includes a voltage which the secondary side circuit applies to the electric storage unit, and a current which the secondary side circuit applies to the electric storage unit, and
the predetermined signal includes a power which the secondary side circuit supplies to the electric storage unit.

9. A charging control method which is performed by a charging control device adapted to charge an electric storage unit of a charged device that includes a secondary side coil, and a secondary side circuit connected to the secondary side coil and configured to be connectable to the electric storage unit, the charging control device comprising:

a voltage control circuit that controls an output voltage by means of a control signal;
a primary side circuit to which the output voltage of the voltage control circuit is applied, and which is provided with a primary side coil capable of electromagnetically inducing the secondary side coil; and
a control unit that includes means for sampling a primary side signal of the primary side circuit, and means for sampling a secondary side signal of the secondary side circuit, the control unit being connected to the voltage control circuit and outputting the control signal, wherein
the control unit samples the secondary side signal at a second cycle,
samples the primary side signal at a first cycle shorter than the second cycle,
estimates the secondary side signal at a timing of the primary side signal sampled this time, based on the secondary side signal, the primary side signal obtained when the secondary side signal is sampled, and the primary side signal sampled this time, and
performs feedback control of the control signal so that a predetermined signal of the secondary side circuit becomes constant.

10. The charging control method according to claim 9, wherein
the charged device further includes a second wireless communication unit connected to the secondary side circuit,
the charging control device further includes a first wireless communication unit connected to the control unit, and
the control unit samples the secondary side signal at the second cycle via the second wireless communication unit and the first wireless communication unit.

# FIG.1

EP 2 763 279 A1

FIG.2

PRIMARY SIDE INVERTER CIRCUIT 20

INVERTER UNIT 21

SECONDARY SIDE RECTIFIER CIRCUIT 40

BRIDGE UNIT 42

RESONANCE UNIT 25

RESONANCE UNIT 41

IL1

EP 2 763 279 A1

17

EP 2 763 279 A1

## FIG.3A

### PRIMARY SIDE VOLTAGE AND SECONDARY SIDE VOLTAGE

VDC2/VDC1

0.07/38 MINUTES

VDC [V]

## FIG.3B

### PRIMARY SIDE CURRENT AND SECONDARY SIDE CURRENT

IDC2/IL1

0.02/38 MINUTES

IL1 [Apeak]

18

FIG.4A

ESTIMATION OF VOLTAGE

FIG.4B

ESTIMATION OF CURRENT

FIG.5A

START

B →

MEASURE SECONDARY SIDE CURRENT AND VOLTAGE — S10

C →

MEASURE PRIMARY SIDE CURRENT AND VOLTAGE — S11

S12

NUMBER OF TIMES OF SECONDARY SIDE MEASUREMENT

S13

FIRST TIME

SET $f(0)$, $g(0)$ BASED ON INITIAL VALUES

S14

SECOND TIME

CALCULATE $f(T)$, $g(T)$ BASED ON MEASUREMENTS THIS TIME

S15

THIRD TIME OR MORE

CALCULATE $f(t)$, $g(t)$ BASED ON MEASUREMENTS IN THE PAST AND THIS TIME

CALCULATE PREDICTED VALUES OF SECONDARY SIDE CURRENT AND VOLTAGE — S16

A

# FIG.5B

(A)

S17

CONTROL METHOD ?

S18 ↓ CONSTANT CURRENT

CALCULATE COMMAND VALUE
TO CHOPPER CIRCUIT BASED
ON PREDICTED CURRENT VALUE

↓ CONSTANT VOLTAGE

CALCULATE COMMAND VALUE
TO CHOPPER CIRCUIT BASED
ON PREDICTED VOLTAGE VALUE ─S19

S20 ↓ CONSTANT POWER

MULTIPLY PREDICTED VOLTAGE AND
CURRENT VALUES, AND CALCULATE
PREDICTED POWER VALUE

CALCULATE COMMAND VALUE
S21 ─ TO CHOPPER CIRCUIT BASED
ON PREDICTED VALUE

CONTROL PWM DUTY OF CHOPPER CIRCUIT ─S22

S23

(C) ← 5 ms ELAPSED AFTER S11  ELAPSED TIME

↓ 100 ms ELAPSED AFTER S10

(B)

EP 2 763 279 A1

# FIG.6A

START

Ⓑ ─────────────→

MEASURE SECONDARY SIDE CURRENT AND VOLTAGE ── S10

Ⓒ ─────────────→

MEASURE PRIMARY SIDE CURRENT AND VOLTAGE ── S11

S12

NUMBER OF TIMES OF SECONDARY SIDE MEASUREMENT

S13A  ↓ FIRST TIME

SET f(t), g(t) BASED ON PREDETERMINED SLOPES AND INITIAL VALUES

S14A  ↓ SECOND TIME

CALCULATE f(t), g(t) BASED ON PREDETERMINED SLOPES AND MEASUREMENTS THIS TIME

S15  THIRD TIME OR MORE

CALCULATE f(t), g(t) BASED ON MEASUREMENTS IN THE PAST AND THIS TIME

CALCULATE PREDICTED VALUES OF SECONDARY SIDE CURRENT AND VOLTAGE ── S16

Ⓐ

# FIG.6B

Ⓐ
↓ S17

◇ CONTROL METHOD ?

S18
↓ CONSTANT CURRENT

CALCULATE COMMAND VALUE
TO CHOPPER CIRCUIT BASED
ON PREDICTED CURRENT VALUE

↓ CONSTANT VOLTAGE

CALCULATE COMMAND VALUE
TO CHOPPER CIRCUIT BASED —S19
ON PREDICTED VOLTAGE VALUE

S20
↓ CONSTANT POWER

MULTIPLY PREDICTED VOLTAGE AND
CURRENT VALUES, AND CALCULATE
PREDICTED POWER VALUE

S21— CALCULATE COMMAND VALUE
TO CHOPPER CIRCUIT BASED
ON PREDICTED VALUE

CONTROL PWM DUTY OF CHOPPER CIRCUIT —S22

↓ S23

Ⓒ ← 5 ms ELAPSED AFTER S11 — ◇ ELAPSED TIME

↓ 100 ms ELAPSED AFTER S10

Ⓑ

## FIG.7A

START

(B) →

MEASURE SECONDARY SIDE CURRENT AND VOLTAGE — S10

(C) →

MEASURE PRIMARY SIDE CURRENT AND VOLTAGE — S11

S12A

NUMBER OF TIMES OF SECONDARY SIDE MEASUREMENT

FIRST TIME

S13
SET $f(0)$, $g(0)$ BASED ON INITIAL VALUES

SECOND TIME OR MORE

S14
CALCULATE $f(T)$, $g(T)$ BASED ON MEASUREMENTS THIS TIME

CALCULATE PREDICTED VALUES OF SECONDARY SIDE CURRENT AND VOLTAGE — S16

(A)

# FIG.7B

(A)

S17
CONTROL METHOD ?

S18
CONSTANT CURRENT
CALCULATE COMMAND VALUE
TO CHOPPER CIRCUIT BASED
ON PREDICTED CURRENT VALUE

CONSTANT VOLTAGE
CALCULATE COMMAND VALUE
TO CHOPPER CIRCUIT BASED
ON PREDICTED VOLTAGE VALUE — S19

S20 CONSTANT POWER
MULTIPLY PREDICTED VOLTAGE AND
CURRENT VALUES, AND CALCULATE
PREDICTED POWER VALUE

S21 —
CALCULATE COMMAND VALUE
TO CHOPPER CIRCUIT BASED
ON PREDICTED VALUE

CONTROL PWM DUTY OF CHOPPER CIRCUIT — S22

S23
(C) — 5 ms ELAPSED AFTER S11    ELAPSED TIME

100 ms ELAPSED AFTER S10

(B)

FIG.8

# FIG.9

START

MEASURE SECONDARY SIDE CURRENT AND VOLTAGE — S10

S17

CONTROL METHOD ?

S18 ↓ CONSTANT CURRENT

CALCULATE COMMAND VALUE
TO CHOPPER CIRCUIT BASED
ON MEASURED CURRENT VALUE

↓ CONSTANT VOLTAGE

CALCULATE COMMAND VALUE
TO CHOPPER CIRCUIT BASED — S19
ON MEASURED VOLTAGE VALUE

S20 ↓ CONSTANT POWER

MULTIPLY MEASURED VOLTAGE AND
CURRENT VALUES, AND CALCULATE
MEASURED POWER VALUE

S21

CALCULATE COMMAND VALUE
TO CHOPPER CIRCUIT BASED
ON PREDICTED VOLTAGE VALUE

CONTROL PWM DUTY OF CHOPPER CIRCUIT — S22

S23

No ← 100 ms ELAPSED ?

Yes

# FIG. 10A

COMPARATIVE EXAMPLE

(a-1)

CHARGING VOLTAGE

[500V/Div]

(a-2)

CHARGING CURRENT

[50A/Div]

(a-3)

CHARGING POWER

[20kW/Div]

# FIG. 10B

FIRST EMBODIMENT

CONSTANT CURRENT CONTROL    CONSTANT POWER CONTROL    CONSTANT VOLTAGE CONTROL

(b-1)

CHARGING VOLTAGE

[500V/Div]

(b-2)

CHARGING CURRENT

[50A/Div]

(b-3)

CHARGING POWER

[20kW/Div]

## INTERNATIONAL SEARCH REPORT

| International application No. |
| --- |
| PCT/JP2011/072356 |

**A. CLASSIFICATION OF SUBJECT MATTER**
*H02J17/00(2006.01)i, H02J7/00(2006.01)i*

According to International Patent Classification (IPC) or to both national classification and IPC

**B. FIELDS SEARCHED**

Minimum documentation searched (classification system followed by classification symbols)
H02J17/00, H02J7/00

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-275280 A  (Sharp Corp.),<br>05 October 2001 (05.10.2001),<br>paragraphs [0027], [0028], [0035] to [0058],<br>[0078]; fig. 2 to 4, 6<br>(Family: none) | 1-10 |
| A | JP 2006-345588 A  (Matsushita Electric Works,<br>Ltd.),<br>21 December 2006 (21.12.2006),<br>paragraphs [0027] to [0029]; fig. 1<br>(Family: none) | 1-10 |
| A | JP 2007-336717 A  (Sharp Corp.),<br>27 December 2007 (27.12.2007),<br>claim 1; paragraphs [0006], [0035]; fig. 1<br>(Family: none) | 1-10 |

| ☒ Further documents are listed in the continuation of Box C. | ☐ See patent family annex. |
| --- | --- |

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>     07 December, 2011 (07.12.11) | Date of mailing of the international search report<br>     20 December, 2011 (20.12.11) |
| --- | --- |
| Name and mailing address of the ISA/<br>     Japanese Patent Office | Authorized officer |
| Facsimile No. | Telephone No. |

Form PCT/ISA/210 (second sheet) (July 2009)

**INTERNATIONAL SEARCH REPORT**

| | International application No. |
| --- | --- |
| | PCT/JP2011/072356 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2011-045195 A (Saitama University), 03 March 2011 (03.03.2011), claim 1; paragraphs [0032] to [0034]; fig. 1 (Family: none) | 1-10 |

Form PCT/ISA/210 (continuation of second sheet) (July 2009)

**EP 2 763 279 A1**

**Patent documents cited in the description**

- JP 2006197727 A

- JP 2010200530 A